## Europäisches Patentamt

## European Patent Office

## Office européen des brevets

(11) Publication number: **0 160 510**
**B1**

## (12) EUROPEAN PATENT SPECIFICATION

(45) Date of publication of patent specification: **14.03.90**

(51) Int. Cl.⁵: **B 32 B 17/10, C 03 C 27/12**

(21) Application number: **85302885.0**

(22) Date of filing: **24.04.85**

(54) Sandwich glass.

(30) Priority: **24.04.84 JP 81172/84**
**24.04.84 JP 81173/84**

(43) Date of publication of application:
**06.11.85 Bulletin 85/45**

(45) Publication of the grant of the patent:
**14.03.90 Bulletin 90/11**

(84) Designated Contracting States:
**DE FR GB**

(56) References cited:
**EP-A-0 076 709**
**WO-A-84/04277**
**WO-A-85/01725**
**DE-A-2 333 186**
**US-A-3 582 455**
**US-A-3 666 614**

(73) Proprietor: **Bridgestone Corporation**
**10-1, Kyobashi 1-Chome Chuo-Ku**
**Tokyo 104 (JP)**

(72) Inventor: **Honda, Toshio**
**1562-34, Ninomiya**
**Akigawa City Tokyo (JP)**
Inventor: **Tanuma, Itsuo**
**3405-181, Kashiwabara**
**Sayama-City Saitama Pref. (JP)**
Inventor: **Takeichi, Hideo**
**22-30, Shibakubo 2-chome**
**Tanashi City Tokyo (JP)**
Inventor: **Oturu, Hiromi**
**1555-10, Ninomiya**
**Akigawa City Tokyo (JP)**
Inventor: **Morimura, Yasuhiro**
**538-2, Aoyagi**
**Kunitachi City Tokyo (JP)**

(74) Representative: **Whalley, Kevin et al**
**MARKS & CLERK 57/60 Lincoln's Inn Fields**
**London WC2A 3LS (GB)**

The file contains technical information
submitted after the application was filed and
not included in this specification

Courier Press, Leamington Spa, England.

**Description**

This invention relates to sandwich glass, for use in windscreens for automobiles, window glass for buildings, decorative glass, glass for the reflection or absorption of heat radiation and the like, and more particularly to a sandwich glass having the desired properties of safety, durability, scuff resistance and penetration resistance.

In this type of sandwich glass, various synthetic resins have hitherto been used as an intermediate layer. In such conventional sandwich glasses, however, it is difficult to satisfy all the requirements of safety, durability, penetration resistance and scuff resistance simultaneously. In particular, even if sufficient penetration resistance and scuff resistance are attained, it is desirable to improve these properties further.

In view of energy-saving, heat-absorbing or heat-reflecting glasses have recently been used as window glass for houses or other buildings. In the heat-absorbing glass, the glass itself or its surface is coloured, while in the heat-reflecting glass, the surface of transparent or coloured glass is provided with a thin layer of metal or metal oxide as a heat-reflecting layer.

However, the heat-absorbing and reflecting glasses are not only very expensive, but also once they are broken, the broken glass pieces are scattered like ordinary glass, thus causing a safety problem.

Furthermore, when a film for the reflection or absorption of heat radiation is affixed to the surface of the glass, the working is relatively simple and the effect of preventing the scattering of broken glass pieces is slightly developed. However, the film itself has poor durability, is apt to peel off and has low scuff resistance, so that it is required to replace the film with a new one every few years.

There have recently been developed decorative glasses, wherein various designs such as drawings, pictures, photographs, letters and the like are applied to the surface of various window glasses or partition glasses. These decorative glasses are widely used as window glass for the partition of bathrooms, children's rooms and the like, as glasses for skylights, as displays in shops or other buildings, as show windows, and further as a replacement for stained glass. In such a case, however, since the design is printed, applied or affixed to the surface of the glass, there are caused the same drawbacks as in the aforementioned glass affixed with the heat-absorbing or reflecting film, and in particular problems of durability and safety occur. In particular, when the decorative glass is used for a partition of a bathroom, since the atmosphere in the bathroom is one of relatively severe conditions of high temperature and high humidity, the design floats or peels off from the glass and also becomes discoloured within 1—2 years. There also occur the same drawbacks as in the decorative glass when a film printed with various designs is directly affixed to the glass surface.

Moreover, although it is possible either to affix a film including a colourant to a glass surface for absorbing heat radiation, or to directly deposit a metal on a glass surface or affix a metal deposited film to a glass surface for providing reflection of heat radiation or conductivity, there also occur the above drawbacks.

The present invention aims to provide a sandwich glass which overcomes or at least mitigates the above drawbacks.

Laminated safety glasses are disclosed in WO—A—84/04277, pub. 08.11.84, US—A—3582455, US—A—3666614, EP—A—76709 and DE—A—2333186.

According to the invention, there is provided a sandwich glass comprising two glass plates and a laminate interposed therebetween, the laminate comprising at least two intermediate layers each composed of a crosslinking type polymer composition which is an ethylene-vinyl acetate copolymer containing an organic peroxide, and an organic resin film layer interposed between the intermediate layers, which organic resin film is a polyester film.

In preferred embodiments of the invention, each of the two glass plates is a heat-absorbing or reflecting glass, the organic resin film layer is transparent and wholly or partially provided with various designs, a part or whole of the film layer is coloured for the absorption of heat radiation, and a metal or metal oxide is deposited on the surface of the film layer for providing an effect of reflection of heat radiation or conductivity.

The material of the organic resin film layer is a polyester, which is selected in view of smoothness, surface gloss (it is required for forming a thin metal film by vapour deposition or the like), strength, workability, etc. of the film layer.

A metal or metal oxide may be deposited on the film layer, for example by vapour deposition, sputtering, or ion plating for providing reflection of heat radiation or conductivity, and the metal or metal oxide may be suitably indium oxide, chromium oxide, gold, vanadium, tin, cadmium oxide, silver, platinum, aluminium, copper, copper oxide, tin oxide, tin antimony oxide, or titanium oxide.

Adhesion between the intermediate layers and the organic resin film layer should be considered having regard to the intermediate layers and the film layer. A safe sandwich glass is first obtained by sufficiently ensuring the adhesion between the glass plate and the intermediate layer and between the intermediate layer and the film layer, whereby durability is ensured for a long time.

In this connection, the present inventors have previously proposed a sandwich glass obtained by interposing ethylene-vinyl acetate copolymer containing a small amount of an organic peroxide as an intermediate layer between two glass plates and then thermosetting it (Japanese Paent Laid-open No. 57-196,747). In this sandwich glass, however, the content of vinyl acetate in the ethylene-vinyl acetate copolymer is restricted to be within a range of 15—50% by weight, because when the content of vinyl acetate is less than 15%, the transparency is insufficient through thermosetting at high temperature, while when the content of vinyl acetate exceeds 50%, the transparency is good, but the modulus lowers and consequently good penetration resistance cannot be obtained.

According to the invention, a sandwich glass having a very good penetration resistance can be obtained without limiting the content of vinyl acetate in the ethylene-vinyl acetate copolymer by interposing a polyester film between at least two intermediate layers each composed of an organic peroxide containing ethylene-vinyl acetate copolymer to form an intermediate laminate, and interposing the laminate between two glass plates, and then thermosetting the intermediate layers. In this case, the ethylene-vinyl acetate copolymer adheres well to the polyester constituting the film in the thermosetting without substantially damaging the transparency, so that even if the content of vinyl acetate in the ethylene-vinyl acetate copolymer is increased, good penetration resistance can be developed owing to the presence of the polyester film interposed between the intermediate layers. That is, even when the content of vinyl acetate exceeds 50% by weight, very good penetration resistance can be obtained.

In addition, if the ethylene-vinyl acetate copolymer (abbreviated as EVA copolymer hereinafter) containing the organic peroxide is heat-treated at a temperature above the decomposition temperature of the organic peroxide, the EVA copolymer becomes transparent and is strongly affixed to the glass plates and the polyester film, respectively.

Moreover, the intermediate layer of EVA copolymer is strongly affixed to the thin metal or metal oxide layer deposited on the polyester film or various designs printed or coated on the film, when provided, so that the use of the EVA copolymer is most suitable for providing a safety sandwich glass.

The organic peroxide used as a curing agent for the EVA copolymer in the manufacture of the sandwich glass according to the invention may be any compound producing radicals by decomposition at a temperature above 100°C, preferably compounds having a decomposition temperature of not less than 70°C under a half-life of 10 hours in view of stability in mixing. For instance, the organic peroxide may be 2,5-dimethylhexane-2,5-dihydroperoxide, 2,5-dimethyl-2,5-di(t-butylperoxy)hexane-3, di-t-butyl peroxide, t-butylcumyl peroxide, 2,5-dimethyl-2,5-di(t-butylperoxy)hexane, dicumyl peroxide, α,α'-bis(t-butylperoxyisopropyl)benzene, n-butyl-4,4'-bis(t-butylperoxy)valerate, 2,2-bis(t-butylperoxy)butane, 1,1-bis(t-butylperoxy)cyclohexane, 1,1-bis(t-butylperoxy)-3,3,5-trimethyl cyclohexane, t-butylperoxy benzoate, or benzoyl peroxide. A sufficient amount of the organic peroxide is up to 5 parts by weight based on 100 parts by weight of the EVA copolymer.

In order to enhance the penetration resistance by increasing the initial modulus of the EVA copolymer as the intermediate layer in the sandwich glass, an acryloxy or methacryloxy group-containing compound can be added to the EVA copolymer. As such a compound, there are most commonly used derivatives of acrylic or methacrylic acid, for example esters and amides thereof. As an alcohol residue of such an ester, mention may be made of alkyl groups such as methyl, ethyl, dodecyl, stearyl, and lauryl; and groups such as cyclohexyl, tetrahydrofurfuryl, aminoethyl, 2-hydroxyethyl, 3-hydroxypropyl, and 3-chloro-2-hydroxypropyl. Further, there may similarly be used esters with polyfunctional alcohols such as ethylene glycol, triethylene glycol, and polyethylene glycol. A typical example of an amide is diacetone acrylamide.

In order to further enhance the adhesion between the EVA copolymer and the glass plate, a silane coupling agent may be added. Suitable silane coupling agents are γ-chloropropylmethoxysilane, vinyltrichlorosilane, vinyltriethoxysilane, vinyltris(β-methoxyethoxy)silane, γ-methacryloxypropyl trimethoxysilane, β-(3,4-ethoxycyclohexyl)ethyl-trimethoxysilane, γ-glycidoxypropyl trimethoxysilane, vinyl-triacetoxysilane, γ-mercaptopropyl trimethoxysilane, γ-aminopropyl triethoxysilane, and N-β-(aminoethyl)-γ-aminopropyl trimethoxysilane.

In the sandwich glass according to the invention, the intermediate layers are strongly affixed to the glass plates and further strongly affixed to each other through the polyester film as mentioned above. Accordingly, the sandwich glass is hard to break, and even if it is broken, the broken glass pieces are not scattered.

Moreover, the deposited thin metal or metal oxide layer, or design printed or coated on the organic resin film, when applied, is not only not directly exposed to air but is also prevented from contacting the air, so that not only is the scuff resistance very good, but also there is very little possibility of changes of properties and colour such as by oxidation or discolouration caused by ultraviolet rays or heat for example. There is also no possibility of corrosion or peeling occurring caused by water or solvent.

The sandwich glass according to the invention may be suitably produced by one of two processes. In the first process, the intermediate layer, the polyester film and the other intermediate layer are laminated on the glass plate in turn. In the second process, the intermediate layer polyester film-intermediate layer are previously laminated by adhesion, sticking, hot-melting or the like and then the laminate is interposed between two glass plates in the sandwiching step. In either of the above two processes, however, sandwich glasses having the desired properties can be obtained.

The invention will be further described with reference to the following illustrative Examples.

Example 1

The adhesion between ethylene-vinyl acetate copolymer and polyester resin film was measured as follows.

That is, 100 parts by weight of a commercially available ethylene-vinyl acetate·copolymer (the content of vinyl acetate: 26%) was compounded with 1 part by weight of dicumyl peroxide as an organic peroxide and 0.3 part by weight of γ-methacryloxypropyl trimethoxy silane as a silane coupling agent. The resulting mixture was homogeneously dispersed by means of a V type mixer and then extruded through a T die having a lip width of 400 mm in an extruder for plastics with a cylinder diameter of 40 mm (preset temperature 80—100°C) to obtain a EVA sheet having a thickness of 0.4 mm.

A commercially available polyester resin film having a thickness of 50 μm was interposed between the above two EVA sheets and heated in an oven at 150°C for 40 minutes while being deaerated under vacuum in a rubber bag to obtain a sample for adhesion test.

The resulting sample was cut into a width of 2.54 cm (1 inch) and then the adhesion was measured by peeling at 180°C using a peeling test machine of Shimazu Auto Graph IS-5000 made by Shimazu Seisakusho to obtain an adhesive force value of 231.7 kN/m (6 kg/inch).

That is, it was confirmed that the adhesion between the ethylene-vinyl acetate copolymer and the polyester resin film was very good.

Example 2

Two EVA sheets each having a thickness of 0.2 mm were extruded from two extruders in the same manner as described in Example 1, respectively, and then a polyester resin film having a thickness of 50 μm and provided with a deposited thin aluminium layer was interposed therebetween. The resulting laminate was cut into a square sheet (305 mm×305 mm), which was interposed between two square float glass plates. The resulting glass assembly was deaerated in a rubber bag under vacuum and then left to stand in an oven at 150°C for 40 minutes to obtain a sandwich glass.

In the resulting sandwich glass, the inclusion of air was not observed at all and the effect on the reflection of heat radiation was equal to that of a heat-reflecting glass provided with a metal film directly deposited thereon.

The fracture state of the above heat-reflecting safety sandwich glass was observed by dropping a steel ball having a weight of 2.25 kg from a height of 2 m or 1.5 m onto the glass surface according to the impact test method of JIS R3025.

In both cases of dropping from the heights of 2 m and 1.5 m, the steel ball did not penetrate through the sandwich glass. In the case of dropping from the height of 2 m, a crack of 70 mm in length was produced, but in case of dropping from the height of 1.5 m, no crack was produced.

Comparative Example 1

Two EVA sheets having a thickness of 0.2 mm were superposed one upon the other and interposed between two float glass plates having a thickness of 3 mm, after which the same procedure as described in Example 2 was repeated to obtain a sandwich glass.

When the steel ball having a weight of 2.25 kg was dropped from a height of 1.5 m onto the surface of the sandwich glass according to the impact test method of JIS R3025, it completely penetrated through the glass after the dropping was repeated two times.

Example 3

An EVA sheet with a thickness of 0.4 mm was extruded in the same manner as described in Example 1 and cooled by passing between an embossing roll and a rubber roll, whereby an embossing pattern was formed on both surfaces of the sheet.

Between two sheets squarely cut out from the above EVA sheet was interposed a coloured heat-absorbing film of polyester resin with a thickness of 50 μm and then the resulting laminate was interposed between two square float glass plates having a thickness of 3 mm. The resulting glass assembly was deaerated in a rubber bag under vacuum and then left to stand in an oven at 150°C for 40 minutes to obtain an air-free sandwich glass.

The thus obtained sandwich glass according to the invention had no inclusion of air, no wrinkles in the film and no distortion of pictures seen through the glass, and was equal in effect of absorption of heat radiation to a glass coated with a coloured sheet.

With respect to six resulting sandwich glasses, a steel ball having a weight of 2.25 kg was dropped onto each glass surface from a height of 4 m to measure the penetration resistance, and as a result the steel ball did not penetrate through five sandwich glasses.

Comparative Example 2

Two EVA sheets obtained in the same manner as described in Example 1 were interposed between the two float glass plates in the same manner as described in Example 3 to obtain a sandwich glass.

With respect to six resulting sandwich glasses, a steel ball having a weight of 2.25 kg was dropped from a height of 4 m onto each glass surface to measure the penetration resistance, and as a result the steel ball penetrated through all sandwich glasses.

Example 4

On both upper and lower sides of a colour gravure printed polyester film were laminated the same EVA sheets as in Example 1 and then the resulting laminate was interposed between two glass plates to obtain the same decorative sandwich glass having no defects such as inclusion of air as in Example 1.

A part of this sandwich glass was subjected to an accelerated exposure for 500 hours in a sunshine weatherometer (made by Suga Shikenki K.K.).

Conditions:
Due cycle
Block panel temperature 63°C
Bath tempreature 40°C
Use of sunshine carbon.

On the other hand, the other part of the decorative sandwich glass was subjected to outdoor exposure for one year.

In both cases of the accelerated exposure and outdoor exposure tests, bubbling, peeling, colour degradation and colour change were not observed at all, and the same colour tone and appearance as in the original sample were maintained.

Example 5

Onto a surface of a commercially available polyester film (thickness 50 μm) was deposited a thin layer of indium oxide ($In_2O_3$) and then cut in a size larger than that of the glass plate to be laminated.

On the upper and lower sides of the film were laminated the two sheets obtained in Example 1 and then the resulting laminate was interposed between two glass plates, after which the same procedure as described in Example 2 was repeated to obtain an air-free electrically conductive sandwich glass F.

Separately, a sandwich glass G was obtained in the same manner as described above, except that indium oxide was not deposited on the polyester film.

Both sandwich glasses were kept at a temperature of 0°C in a refrigerator for 30 minutes and then taken out therefrom. In the sandwich glass F, electrodes were quickly set in the two side portions of the $In_2O_3$ deposited polyester film protroducing from the glass, and the application of electric current was continued under a constant voltage (24 V).

Immediately after both sandwich glasses F and G were taken out from the refrigerator, a mist based on waterdrops was produced over the whole surface of both glasses, the mist very quickly disappeared in the sandwich glass F as compared with the sandwich glass G.

From the above result, it is apparent that the sandwich glass according to the invention has suitability as a safety glass for de-misting.

## Claims

1. A sandwich glass comprising two glass plates and a laminate interposed therebetween, characterized in that the laminate comprises at least two intermediate layers each composed of a crosslinking type polymer composition which is an ethylene-vinyl acetate copolymer containing an organic peroxide, and an organic resin film layer interposed between the said intermediate layers, wherein the said organic resin film is a polyester film.

2. A sandwich glass as claimed in Claim 1, characterized in that the said polyester film is transparent and is wholly or partially provided with various designs.

3. A sandwich glass as claimed in Claim 1, characterized in that the said polyester film is wholly or partially coloured for the absorption of heat radiation.

4. A sandwich glass as claimed in any of claims 1 to 3, characterized in that a thin layer of a metal or metal oxide is deposited on the surface of the said polyester film for the reflection of heat radiation and/or conductivity.

5. A sandwich glass as claimed in claim 4, characterized in that the formation of the said thin film of metal or metal oxide is carried out by vapour deposition, sputtering or ion plating.

6. A sandwich glass as claimed in claim 4 or 5, characterized in that the said metal or metal oxide is selected from indium oxide, chromium oxide, gold, vanadium, tin, cadmium oxide, silver, platinum, aluminium, copper, copper oxide, tin oxide, tin antimony oxide and titanium oxide.

## Patentansprüche

1. Verbundglas, umfassend zwei Glasplatten und ein dazwischen angeordnetes Laminat, dadurch gekennzeichnet, das Laminat mindestens zwei Zwischenschichten, die jeweils aus einer Polymerzusammensetzung vom Vernetzungstyp, bei der es sich um ein ein organisches Peroxid enthaltendes Ethylen-Vinylacetat-Copolymer handelt, aufgebaut sind, und eine zwischen den Zwischenschichten angeordnete Filmschicht aus einem organischen Herz umfaßt, wobei der organische Harzfilm ein Polyesterfilm ist.

2. Verbundglas nach Anspruch 1, dadurch gekennzeichnet, daß der Polyesterfilm transparent ist und ganz oder teilweise mit verschiedenen Mustern versehen ist.

3. Verbundglas nach Anspruch 1, dadurch gekennzeichnet, daß der Polyesterfilm für die Absorption von Wärmestrahlung ganz oder teilweise gefärbt ist.

4. Verbundglas nach mindestens einem der Ansprüche 1 bis 3, dadurch gekennzeichnet, daß eine dünne Schicht aus einem Metall oder Metalloxid auf der Oberfläche des Polyesterfilms niedergeschlagen ist zu Zwecken der Reflektion von Wärmestrahlung und/oder Leitfähigkeit.

5. Verbundglas nach Anspruch 4, dadurch gekennzeichnet, daß die Bildung des dünnen Films aus Metall oder Metalloxid mittels Dampfabscheidung, Zerstäubung oder Ionenplattierung durchgeführt wird.

6. Verbundglas nach Anspruch 4 oder 5, dadurch gekennzeichnet, daß das Metall oder Metalloxid aus Inidiumoxid, Chromoxid, Gold, Vanadium, Zinn, Cadmiumoxid, Silber, Platin, Aluminium, Kupfer, Kupferoxid, Zinnoxid, Zinn-Antimonoxid und Titanoxid gewählt wird.

## Revendications

1. Verre feuilleté comprenant deux feuilles de verre et un stratifié interposé entre elles, caractérisé en ce que le stratifié comprend au moins deux couches intermédiaires composées chacune d'une composition de polymère de type réticulant, qui est un copolymère d'éthylène-acétate de vinyle contenant un peroxyde organique, et une couche de pellicule de résine organique interposée entre lesdites couches intermédiaires, où ladite pellicule de résine organique est une pellicule de polyester.

2. Verre feuilleté selon la revendication 1, caractérisé en ce que ladite pellicule de polyester est transparente et comporte totalement ou partiellement divers dessins.

3. Verre feuilleté selon la revendication 1, caractérisé en ce que ladite pellicule de polyester est totalement ou partiellement colorée pour l'absorption d'un rayonnement thermique.

4. Verre feuilleté selon l'une des revendications 1 à 3, caractérisé en ce qu'une couche mince d'un métal ou d'un oxyde métallique est déposée sur la surface de ladite pellicule de polyester pour la réflexion et/ou la conduction d'un rayonnement thermique.

5. Verre feuilleté selon la revendication 4, caractérisé en ce que la formation de ladite pellicule mince de métal ou d'oxyde métallique est effectuée par dépôt par vaporisation, pulvérisation ou placage ionique.

6. Verre feuilleté selon la revendication 4 ou 5, caractérisé en ce que ledit métal ou oxyde métallique est choisi parmi l'oxyde d'indium, l'oxyde de chrome, l'or, le vanadium, l'étain, l'oxyde de cadmium, l'argent, le platine, l'aluminium, le cuivre, l'oxyde de cuivre, l'oxyde d'étain, l'oxyde d'étain et d'antimoine et l'oxyde de titane.